# EUROPEAN PATENT APPLICATION

(11) **EP 2 299 343 A2**
(43) Date of publication of application: **23.03.2011**
(21) Application number: 10380111.4
(22) Date of filing: 26.08.2010
(51) Int. Cl.: G05B 19/4097

(54) **Method for designing and manufacturing model pieces of variable configuration**

(30) Priority: 18.09.2009 ES 200930704
(71) Applicant: Airbus Operations, S.L., 28906 Getafe Madrid (ES)
(72) Inventor: De Marcos Serrano, Angel, 28906 GETAFE (MADRID) (ES); Romero Checa, Eduardo, 28906 GETAFE (MADRID) (ES); Alvarez Gonzalez, José Julian, 28906 GETAFE (MADRID) (ES)
(74) Representative: Ungria Lopez, Javier

(57) **Abstract**

It is applied in those processes in which it is required to modify the configuration of a first piece (1) for which, when joined to a second piece (2), for carrying out different tests, as is the case of measurements of aerodynamic properties of objects in a wind tunnel, it is required to modify the first piece, which implies modifying the coupling part of the second piece (2) on the first piece (1).

The invention avoids manufacturing the complete second piece (2) with each new design of the first piece (1), for which the latter is designed and manufactured with a fixed configuration, valid for any possible configuration (1a, 1b) of the first piece (1) and which lacks the coupling part (3) with the first piece (1) in such a way that a third piece (3) is designed and manufactured corresponding to the coupling part between the configuration (1a, 1b) of the first piece (1) and the second piece (2) for carrying out the joint between both, with each design of the first piece.

## Description

### OBJECT OF THE INVENTION

The invention relates to a method for designing and manufacturing pieces constituting a model wherein at least one of its constituent pieces has to be modified in order to conduct different tests on the model, which determines that the pieces to which the modified piece should joint must be modified in its joining area in order to allow carrying out the coupling joint between them. The invention is intended to carry out an adaptive design of the pieces that are joined to the modified piece, such that a fixed part is designed and manufactured, valid for any possible configuration of the piece that is modified, and the design and manufacture of a variable piece corresponding to the junction area between the modified piece and the fixed piece is performed, so that a single fixed piece valid for each one of the possible configurations of modified pieces is manufactured and only the design and manufacture of the junction area between the modified piece and the fixed piece are varied.

The invention is included in the technical field of systems for measuring aerodynamic properties of objects, particularly of aerodynamic models exposed to an air flow in a wind tunnel.

### BACKGROUND OF THE INVENTION

During the testing of aircraft models in an aerodynamic tunnel, it is common to test various geometries for a same piece or component, such as may be for example the fuselage, wing, horizontal tail, vertical tail, etc., due to the changes in the geometries of one of the pieces that it is necessary to adapt, or in many cases re-manufacturing the pieces that have to be joined to the piece which geometry had been modified. Accordingly, if for example a change in the fuselage geometry is made, for which a new fuselage piece is manufactured, a new piece of the horizontal stabilizer (HTP) is also required, whereby it is necessary to re-manufacture both the fuselage and the horizontal stabilizer, since the interfaces or junction area between them change, and consequently the two pieces must be re-manufactured so that they can joint to each other.

### DESCRIPTION OF THE INVENTION

In order to achieve the objectives and solve the aforementioned drawbacks, the invention has developed a new method for designing and manufacturing model pieces whose configuration is variable because different tests have to be conducted on the model.

Thus, the invention is applied to those processes wherein it is required to modify the configuration of a first piece that has to be joined to a second piece, for conducting different tests, so that the modification of the first piece involves the modification of the coupling part of the second piece to the first piece, in order to allow the joint between both. The main novelty of the invention lies in that the method comprises the following phases:
- designing and manufacturing the first piece with a first configuration;
- designing and manufacturing the second piece with a fixed configuration, which has to be valid for any possible configuration of the first piece, and which lacks the coupling part with the first configuration of the first piece;
- designing and manufacturing a third piece with a first configuration, corresponding to the coupling part between the first configuration of the first piece and the second piece, in order to joint said first and second pieces.

The configuration of the third piece comprises designing and manufacturing first additional parts which, when joined to the second piece, provide the first coupling configuration between the first configuration of the first piece and the second piece, so that the joint between said first and second pieces is allowed.

As has been mentioned before, in many cases it is necessary to conduct different tests with different configurations on models, for which the configuration of one of the model pieces is varied, as may be for example the first piece, in which case the method comprises designing and manufacturing the first piece with a second configuration and designing and manufacturing the third piece with a second coupling configuration between the second configuration of the first piece and the second piece, in order to allow the joint between said first and second pieces.

In the case wherein new tests with new configurations of the first piece are required to be conducted, the previous stages are repeated, that is the first piece is designed and manufactured with a new configuration and the third piece is designed and manufactured with a new coupling configuration between the new configuration of the first piece and the second piece, in order to allow the joint between said first and second pieces.

The different configurations of the third piece comprise designing and manufacturing different additional parts which, when joined together, provide the necessary coupling configurations between the different configurations of the first piece and the second piece.

Accordingly, using the method of the invention a single fixed configuration of the second piece that is valid for each and every one of the different configurations that can be adopted by the first piece that can be modified is always manufactured, for then designing a new third coupling piece between the new first and second pieces. This prevents the need for designing and manufacturing again the second piece with each one of the configurations that can be adopted by the first piece, and it is only required to design and manufacture the third piece with each possible configuration of the first piece that can be modified, which avoids manufacturing model parts, corresponding to the fixed part of the second piece, and thus the manufacturing process is cheaper and the time required to obtain the model is reduced.

The invention is applied to models that are built to measure aerodynamic properties of objects in a wind tunnel, as may be for example, models emulating the empennage of an aircraft.

In order to facilitate a better understanding of this specification, and being an integral part thereof, a series of figures in which the object of the invention has been represented with an illustrative and not limitative manner is attached.

### BRIEF DESCRIPTION OF THE FIGURES

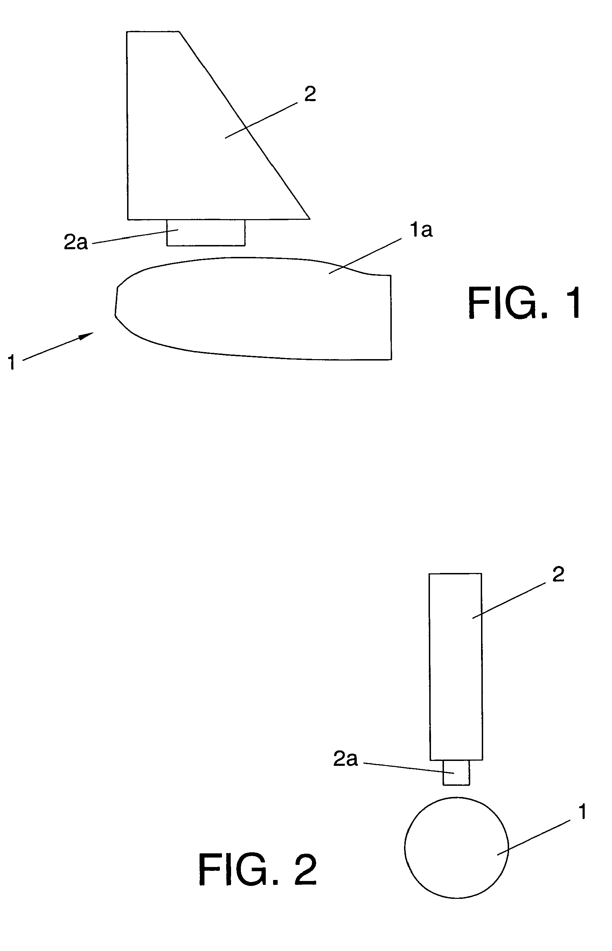

- **Figure 1****.** Shows a side schematic view of a first configuration of the tail cone and the vertical stabilizer without the coupling part between both, which are separately manufactured and are joined to conduct tests in a wind tunnel.
- **Figure 2****.** Shows a rear view of the previous figure.

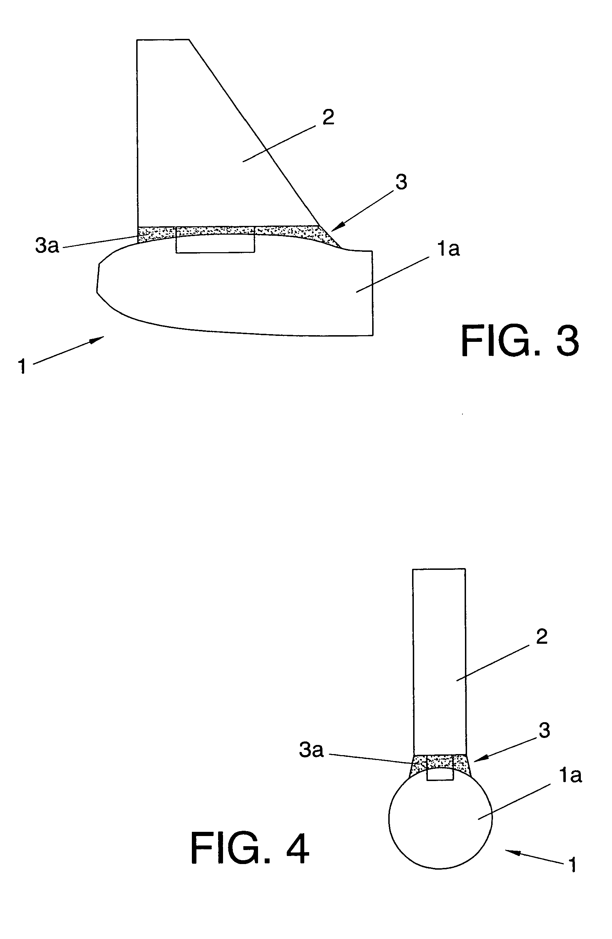

- **Figure 3****.** Shows a side view equivalent to figure 1 with the coupling part between the first configuration of the tail cone and the vertical stabilizer that enables the joint between both.
- **Figure 4****.** Shows a rear view corresponding to the previous figure.
- **Figure 5****.** Shows a side view of a second configuration of the tail cone wherein the coupling part of the vertical stabilizer to the tail cone has been varied for allowing the joint between both according to the new configuration of the tail cone.
- **Figure 6****.** Shows a rear view of the previous figure.

### DESCRIPTION OF THE PREFERRED EMBODIMENT

A description of the invention based on the aforementioned figures is made bellow.

The embodiment example of the invention relates to a model that represents the rear part of an aircraft for conducting tests in an aerodynamic tunnel. This rear part comprises a tail cone constituting a first piece 1 whose configuration can be modified in order to conduct different tests in the aerodynamic tunnel. The vertical stabilizer constituting a second piece 2 whose structure should be coupled to the different configurations that the tail cone 1 can adopt, is joined to the tail cone 1, which requires modifying the junction area or coupling part of the horizontal stabilizer 2 to the tail cone 1. For this purpose, what is done in the state of the art is manufacturing a new vertical stabilizer 2 for each new design of the tail cone 1 that is made, which is avoided by means the invention.

To this purpose, the method of the invention envisages designing and manufacturing the first piece 1 with a first configuration 1a corresponding to that which is desired to be tested in the aerodynamic tunnel, and then designing and manufacturing the vertical stabilizer 2 with a fixed configuration, as shown in the figures, so that this fixed configuration is valid for any possible configuration that the tail cone may adopt, and thus lacks the coupling part to the tail cone 1, so that the fixed configuration of the vertical stabilizer 2 is the same for any configuration of the tail cone 1, what avoids manufacturing it with each new configuration of the tail cone 1.

In order to joint the fixed configuration of the vertical stabilizer 2 to the tail cone 1, a third piece 3 is required to be designed and manufactured with a first configuration 3a, corresponding to the coupling part between the first configuration 1a of the tail cone 1 and the fixed configuration of the vertical stabilizer 2.

The third piece is constituted by different additional parts which, when joined to the horizontal stabilizer 2, provide the first coupling configuration 3a allowing the joint between the tail cone 1 and the vertical stabilizer 2.

These additional parts constituting the third piece are designed in function of the junction area enabling the fixation of the vertical stabilizer 2 to the tail cone 1, and therefore it is understood that it may adopt different configurations in function of said junction area.

Reference 2a represents the shovel that is conventionally used to joint the vertical stabilizer 2 and the tail cone 1. Said reference 2a represents the part of the fixed configuration of said shovel, since said shovel can further include additional parts constituting the first configuration 3a of the third piece 3 according to the needs required in the junction area between the vertical stabilizer 2 and the tail cone 1.

This configuration allows performing an optimum design of the fixed part 2a of the shovel, what reduces the stress supported by the shovel and which is valid for each and every one of the different configurations that the tail cone 1 may present, since said fixed part 2a of the shovel will be then complemented with the additional parts required to complete the shovel and that form part of the third piece corresponding to the coupling part between the tail cone 1 and the vertical stabilizer 2.

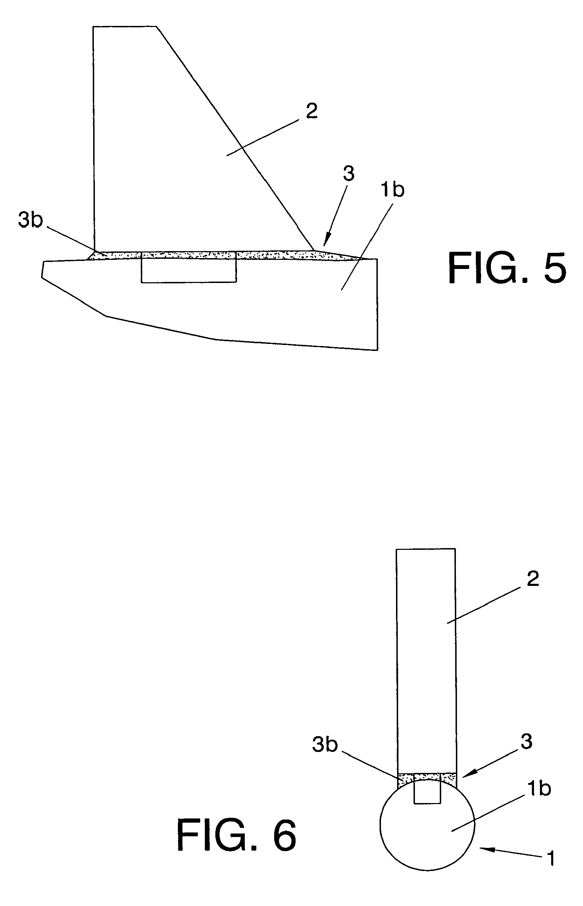

The case wherein the tail cone 1 has been modified so that a second configuration 1b of the tail cone 1 is obtained is shown in figures 5 and 6. In this case, as already discussed, the fixed configuration of the vertical stabilizer 2 remains the same as for the previous example, whereby the junction area of the vertical stabilizer 2 to the second configuration 1b of the tail cone 1 varies. Consequently, in this case the third piece 3 is constituted by additional second parts that, as in the previous case, when joined, provide a second coupling configuration 3b between the second configuration 1b of the tail cone 1 and the vertical stabilizer 2.

In this case the third piece 3a is constituted by additional second parts which, when joined, provide the second coupling configuration between the second configuration of the tail cone 1a and the vertical stabilizer 2.

With any modification performed in the tail cone 1 the process is repeated, manufacturing a new third piece 3 corresponding to the junction area of the vertical stabilizer 2 to the new configuration of the tail cone 1.

## Claims

1. **METHOD FOR DESIGNING AND MANUFACTURING MODEL PIECES OF VARIABLE CONFIGURATION**, applicable in those processes wherein it is required to modify the configuration of a first piece (1) which when joined to a second piece (2), for conducting different tests, so that the modification of the first piece (1) involves the modification of the coupling part (3) of the second piece (2) to the first piece (1), in order to allow the joint between said first and second pieces; **characterized in that** it comprises:
• designing and manufacturing the first piece (1) with a first configuration (1a);
• designing and manufacturing the second piece (2) with a fixed configuration, valid for any possible configuration (1a, 1b) of the first piece (1), and which lacks the coupling part (3) with the first configuration (1b) of the first piece (1) ;
• designing and manufacturing a third piece (3) with a first configuration (3a), corresponding to the coupling part between the first configuration (1b) of the first piece (1) and the second piece (2), in order to joint said first piece (1) and second piece (2).

2. **METHOD FOR DESIGNING AND MANUFACTURING MODEL PIECES OF VARIABLE CONFIGURATION**, according to claim 1, **characterized in that** the first configuration (3a) of the third piece (3) comprises designing and manufacturing additional first parts which when joined to the second piece (2) provide the first coupling configuration (3a) between the first configuration (1a) of the first piece (1) and the second piece (2), in order to joint said first configuration (1a) of the first piece (1) and the second piece (2).

3. **METHOD FOR DESIGNING AND MANUFACTURING MODEL PIECES OF VARIABLE CONFIGURATION**, according to claim 1, **characterized in that** it further comprises:
• designing and manufacturing the first piece (1) with a second configuration (1b);
• designing and manufacturing the third piece (3) with a second coupling configuration (3b) between the second configuration (1b) of the first piece (1) and the second piece, in order to joint said second configuration (1b) of the first piece (1) and the second piece (2);
• repeating the two previous phases with each new configuration of the first piece (1) to be tested with the second piece (2).

4. **METHOD FOR DESIGNING AND MANUFACTURING MODEL PIECES OF VARIABLE CONFIGURATION**, according to claim 3, **characterized in that** the third piece (3) comprises designing and manufacturing additional second parts which, when joined together, provide the second coupling configuration (3b) between the second configuration (1b) of the first piece (1) and the second piece (2), in order to joint said second configuration (1b) of the first piece (1) and the second piece (2).

5. **METHOD FOR DESIGNING AND MANUFACTURING MODEL PIECES OF VARIABLE CONFIGURATION**, according to claim 1, **characterized in that** it is applied in models built for measuring aerodynamic properties of objects in a wind tunnel.

6. **METHOD FOR DESIGNING AND MANUFACTURING MODEL PIECES OF VARIABLE CONFIGURATION**, according to claim 5, **characterized in that** it is applied in models emulating the empennage of an aircraft.
